# EUROPÄISCHE PATENTSCHRIFT

(11) **EP 1 890 985 B1**
(45) Veröffentlichungstag und Bekanntmachung des Hinweises auf die Patenterteilung: **23.01.2013**
(21) Anmeldenummer: 06754329.8
(22) Anmeldetag: 13.06.2006
(51) Int. Cl.: C05G 3/00, C05G 5/00

(54) **BESCHICHTETES DÜNGEMITTEL MIT KONTROLLIERTER WIRKSTOFFFREISETZUNG UNG VERFAHREN ZU DESSEN HERSTELLUNG**
COATED FERTILISER WITH A CONTROLLED RELEASE OF ACTIVE INGREDIENTS, AND METHOD FOR THE PRODUCTION THEREOF
ENGRAIS RECOUVERT D'UN REVETEMENT CARACTERISE PAR UNE LIBERATION CONTROLEE DES SUBSTANCES ACTIVES ET PROCEDE DE PRODUCTION DE CET ENGRAIS

(30) Priorität: 16.06.2005 DE 102005028016
(43) Veröffentlichungstag der Anmeldung: 27.02.2008
(73) Patentinhaber: ThyssenKrupp Uhde GmbH, 44141 Dortmund (DE)
(72) Erfinder: WÖLZL, Wilfried, 44229 Dortmund (DE); NIEHUES, Paul, 44265 Dortmund (DE); WITTRIEN, Rainer, 44309 Dortmund (DE); HASTEDT, Helmut, 58313 Herdecke (DE); HAGEN, Rainer, 13465 Berlin (DE)
(86) Internationale Anmeldenummer: PCT/EP2006/005658
(87) Internationale Veröffentlichungsnummer: WO 2006/133893

(56) Entgegenhaltungen:
- EP-A- 0 763 510
- EP-A1- 2 031 083
- WO-A2-01/81610
- JP-A- 2001 064 089
- JP-A- 2001 064 090
- US-A- 5 645 624
- J. DAHLMANN, G. RAFLER, K. FECHNER, B. MEHLIS: "SYNTHEYSIS AND PROPERTIES OF BIODEGRADABLE ALIPHATIC POLYESTERs", BRITISH POLYMER JOURNAL, vol. 23, 1 January 1990 (1990-01-01), pages 235-240,
- M. STANIFORTH, M.O'HANLON, T.M. KHONG: "Comparative study of lactic acid and polyactides using static headspace, gas chromatography and high-performance liquid chromatography", JOURNAL OF CHROMATOGRAPHY A, vol. 833, 1 January 1999 (1999-01-01), pages 195-208,

## Beschreibung

Die Erfindung richtet sich auf ein Düngemittel, welches eine Beschichtung mit einem biologisch oder hydrolytisch abbaubaren Oligomer oder Polymer aufweist, welches eine kontrollierte Wirkstofffreigabe ermöglicht, die im Vergleich zu einem nicht beschichteten Düngemittel zeitlich stark verzögert abläuft.

Es sind im Stand der Technik sogenannte "slow release" oder "delayed release" Düngemittel bekannt, die eine über die Wachstumsperiode der Pflanzen langsame und kontrollierte Wirkstoffabgabe ermöglichen, wobei dies unter anderem zu erreichen versucht wird, indem das Düngemittelgranulat beschichtet wird.

In US 4,019,890 A1 wird vorgeschlagen, als Beschichtungsstoffe Polymere wie Polyethylen, Polypropylen oder Polystyrol einzusetzen. Diese Beschichtungsstoffe sind biologisch weitestgehend inert, führen aber zu einer unerwünschten Anreicherung auf den agrarisch intensiv genutzten Flächen, da diese Stoffe nicht innerhalb einer Vegetationsphase vollständig verrotten.

US 4,801,498 A1 schlägt als Beschichtungsstoff ebenfalls ein wasserunlösliches, neutralisiertes und carboxyliertes Polymer vor, welches mittels eines organischen Lösungsmittels vor der Beschichtung gelöst wird. Als organische Lösungsmittel werden Tetrahydrofuran, Essigsäure, Xylol oder Toluol vorgeschlagen. Neben der analogen Anreicherungsproblematik sind hier die erforderlichen Lösungsmittel im landwirtschaftlichen Einsatz als nachteilig zu betrachten. Ein ähnlicher Beschichtungsstoff wird auch in US 4,829,124 A1 vorgeschlagen.

Die Verwendung einer biologisch abbaubaren Mischung aus Biuret, Urethanen und Tung Öl wird in WO97/48664 als Beschichtungsmittel offenbart. Dabei wird mittels Benetzung des Harnstoffs mit Polyisocyanat und Reaktion des Polyisocyanats mit einem Alkohol eine Reaktion auf der Kornoberfläche erzeugt, die die Bildung einer dichten und mechanisch festen polymeren Schicht zur Folge hat. Bei der Reaktion wird nachteiligerweise Harnstoff verbraucht und das phytotoxisch wirkende Biuret gebildet. Eine ähnliche Beschichtung wird in WO03/082003 A2 vorgeschlagen, bei welcher Harnstoff mit einem Formaldehyd polymerisiert wird.

Eine weitere im Stand der Technik bekannte Beschichtung ist die mittels elementarem Schwefel. Schwefel ist phytologisch gesehen in geringen Konzentrationen ein erwünschter Nährstoff, welcher nur gering wasserlöslich ist und daher als Beschichtungsmittel grundsätzlich geeignet ist. Derartige Beschichtungen von Düngemitteln sind aus Ullmann (6. Auflage "Fertilizer" Abs. 4.4.5.1) oder WO92/17424 A1 bekannt. Vor allem in WO92/17424 A1 sind bekannte Beschichtungsstoffe sehr umfassend aufgeführt. Bei einer Schwefelbeschichtung stellt sich das Problem, dass ein Optimum zwischen Nährstofffreigabe und der ausgebrachten Schwefelmenge gefunden werden muss, damit es nicht zu einer phytotoxischen Schwefelanreicherung im Boden kommt.

Die DE 694 19 125 T2 beschreibt ein Düngemittel, welches eine aus zwei Schichten bestehende Umhüllung aufweist. Eine erste innere Schicht ist biologisch abbaubar und besteht aus einem aliphatischen Polyester, wie beispielsweise Poly-L-Milchsäure mit einem bevorzugten Gewichtsmittel des Molekulargewichts von 150.000 bis 250.000 oder einem Polyurethan, und eine wasserunlösliche äußere Schicht aus einem langsam biologisch oder durch Licht abbaubaren Polymer, wie beispielsweise Cellulosederivate.

Es ist von besonderer wirtschaftlicher Bedeutung, dass das Düngemittel technisch einfach herstellbar ist. Daher ist es als nachteilig anzusehen, wenn ein Düngemittelkorn mit zwei unterschiedlichen Stoffen beschichten werden muss.

Aufgabe der Erfindung ist es daher, ein wirtschaftlich günstiges beschichtetes Düngemittelgranulat bereitzustellen, welches eine zeitlich verzögerte Wirkstofffreigabe ermöglicht und diese Hemmung der Wirkstofffreigabe ohne phytologische Nachteile erfolgt. Weiterhin ist Aufgabe der Erfindung ein Verfahren zur Herstellung dieses beschichteten Düngemittels zu offenbaren.

Die Erfindung löst diese Aufgabe gemäß dem Anspruch 1 dadurch, dass ein beschichtetes Düngemittelgranulat vorgeschlagen wird, welches
- eine Beschichtung aus einem oder mehreren biologisch oder hydrolytisch abbaubaren Polymeren, Oligomeren oder einer Mischung besitzt, die ein Polylactid oder ein Copolyester der L(+) Milchsäure umfasst, wobei
- über 40 mol % der molekularen Grundbausteine des Polylactids aus L(+)-Milchsäureeinheiten bestehen, und
- das Polymer oder Oligomer aus Polylactid von Dilactid, Lactoylmilchsäure oder einer Mischung daraus einen Gehalt aufweist, welcher kleiner oder gleich 5 Gewichtsprozent beträgt.
das Düngemittel zwei oder mehr Schichten von Polymeren oder Oligomeren, welche an dem selben oder unterschiedlichen Stoffen bestehen wobei zwischen zwei Schichten aus Polymeren oder Oligomeren eine weitere Schicht aus Düngemittelwirkstoff befindet.

Die höheren Konzentrationen an Dilactid oder Lactoylmilchsäure beschleunigen den Abbau, während niedrige Konzentrationen den Abbau verzögern. Die Abbaugeschwindigkeit des Polylactids durch Hydrolyse und Biolyse kann ferner durch Endgruppenmodifizierung beeinflusst werden. Fettsäuren und Fettalkohole verringern dabei die Abbaugeschwindigkeit. Polyethylenglykol erhöht diese. Diese Zusatzstoffe können zu Beginn, während oder am Ende der Polymerisation dem Reaktionsgemisch zugegeben werden.

Die biologische Abbaubarkeit der Polymere oder Oligomeren soll dabei verstanden werden, wie sie in EN 13434 in A.2.2 und A.3.1 für den aeroben Abbau von Kunststoffen definiert ist, wobei diese mittels Test analog ISO 14855 oder ASTM D 5338 ermittelt werden kann. Dabei wird die biologisch und hydrolytisch bedingte Zersetzung des erfindungsgemäßen Düngemittels und hier speziell der Beschichtung auf agrarischen Flächen natürlich deutlich länger dauern, als unter den extremen Bedingungen einer industriellen Kompostierung.

Unter Hydrolyse ist die Spaltung eines Moleküls unter Anlagerung eines Wassermoleküls zu verstehen. Dabei wird ein Wasserstoffatom an das eine Molekülfragment, der verbleibende Hydroxylrest an das andere Fragment gebunden. Diese derart entstandenen neuen Moleküle werden somit nach einer oder gegebenenfalls mehrmaliger Hydrolyse für einen anschließenden biologisch-enzymatischen Abbauprozess zugänglich.

Dabei besteht das erfindungsgemäße Düngemittelgranulat in den prozentual größten Nährstoffanteilen aus einer Stickstoff-, Phosphor- oder Kaliumverbindung oder einer Mischung aus diesen. Besonders sind in diesem Zusammenhang die nachstehenden Nährstoffe wie Harnstoff, Ammoniumnitrat, Calciumnitrat, Calciumammoniumnitrat, Mono- oder Diammoniumphosphat, Sulfate, wie Ammoniumsulfat oder Mischungen aus diesen zu nennen.

Dabei kann das vorgenannte Düngemittelgranulat in geringen Anteilen Spurennährstoffe enthalten. Diese Spurennährstoffe sind unter anderem Alkali- oder Erdalkalimetalle, Schwefel, Kupfer, Zink, Bor, Kobalt, Mangan, Molybdän oder Selen sowie diese Stoffe beinhaltende Verbindungen oder Mischungen.

In einer vorteilhaften Ausgestaltung des erfindungsgemäßen Düngemittelgranulats ist das Polymer oder Oligomer ein Polylactid oder ein Copolyester der L(+)-Milchsäure, wobei idealerweise über 40 mol % der molekularen Grundbausteine des Polylactid aus L(+)-Milchsäureeinheiten bestehen. Das Zahlenmittel der mittleren Molmasse dieses Oligo- oder Polylactids kann dabei zwischen 500 und 300.000 g/mol betragen.

Als vorteilhaft hat es sich dabei herausgestellt, wenn das Zahlenmittel der Molmasse des Polymers oder des Oligomers größer oder gleich 500 g/mol beträgt. Oligomere mit Molmassen unter 500 weisen zu starke Klebrigkeit auf. Eine Beschichtung aus Polylactid mit diesen niedrigen Molmassen weist eine gute biologische Abbaubarkeit auf und ist zudem technisch einfach herzustellen. Polylactid mit einer Molmasse unter 5.000 g/mol kann mittels direkter Polykondensation der Milchsäure hergestellt werden, wobei in der Regel kein Katalysator für die Reaktion eingesetzt werden muss, so dass auch kein Katalysator als Verunreinigung im Produkt verbleibt. Mittels des Polymerisierungsgrades, des Restanteils an Monomeren und Dimeren, sowie des Anteils an Co-Monomeren, kann die biologische Abbaubarkeit in weiten Bereichen gesteuert werden.

Eine weitere vorteilhafte Verbesserung des Düngemittelgranulats, welches mit Polylactid beschichtet ist besteht darin, dass der Rest der Grundbausteine, welche keine L(+)-Milchsäureeinheiten sind, aus D(-)-Milchsäureeinheiten, aus den Einheiten mindestens einer Hydroxycarbonsäure oder einer Mischung aus diesen besteht. Beispiele für geeignete Hydroxycarbonsäuren sind Glycolsäure, Hydroxybuttersäure, Hydroxyvaleriansäure.

Von der Erfindung ist weiterhin auch umfasst, dass mindestens eine der Schichten aus biologisch abbaubaren Polymeren oder Oligomeren Spurennährstoffe enthält, wobei idealerweise die Spurennährstoffe ausschließlich in einer der Schichten aus biologisch abbaubaren Polymeren oder Oligomeren enthalten sind. Der wesentliche Vorteil besteht darin, dass die Abstimmung auf die jeweils lokal gegebenen Boden- und Pflanzenerfordernisse nicht im Zusammenhang mit der Massenproduktion der Hauptnährstoffkomponenten erfolgen muss, sondern davon abgekoppelt vorgenommen werden kann.

Werden die Spurennährstoffe separat auf die Anbaufläche aufgetragen, bestand bisher immer das Problem, diese vergleichsweise geringen Mengen homogen und gleichmäßig auf großen Flächen zu verteilen. Bei dem üblichen Versprühen wässriger Lösungen sind Entmischungen in den Tanks, das Abdriften und Verschleppen der feinen Tröpfchen durch Wind oder zu schnelles Versickern und Eintrag in das Grundwasser ein bekanntes Problem. Hinzu kommt, dass das separate Versprühen einen weiteren Arbeitsschritt für den Landwirt darstellt.

Ein weiterer Vorteil besteht darin, dass die erfindungsgemäß eingesetzten biologisch abbaubaren Beschichtungsstoffe inert gegenüber den vorgenannten Haupt- und Spurennährstoffen sind und keine Neben- oder Folgereaktionen stattfinden.

Die erfindungsgemäß eingesetzten Spurennährstoffe entstammen der Gruppe der Alkali- oder Erdalkalimetalle, Schwefel, Kupfer, Zink, Bor, Kobalt, Molybdän, Mangan, Selen sowie diese Stoffe beinhaltende chemische Verbindungen oder Mischungen.

Besonders vorteilhaft im Vergleich zu den im Stand der Technik bekannten Beschichtungsstoffen ist dabei, dass, abgesehen von einer falschen Dosierung der Spurennährstoffe, zu keinem Zeitpunkt, auch bei einer fehlerhaften Einstellung der Beschichtung hinsichtlich Menge oder Qualität des polymeren oder oligomeren Beschichtungsstoffes, die Phytoshäre oder das hydrolytische System der Ackerfläche toxisch belastet werden kann.

Von der Erfindung ist weiterhin ein Verfahren zur Herstellung des vorgenannten beschichteten Düngemittelgranulats umfasst. Dieses zeichnet sich dadurch aus, dass - unbeschichtetes festes oder teilverfestigtes Düngemittelgranulat mit einem verflüssigen Polymer, Oligomer oder Mischung mit diesen Polymeren oder Oligomeren gemäß einer der vorgenannten Zusammensetzungen mindestens einmal benetzt und - anschließend verfestigt wird, indem es getrocknet, gekühlt oder beides wird, wobei - die Benetzung und Verfestigung mehrmals wiederholt werden kann und dazu - dasselbe oder ein zum vorausgegangen Benetzungsvorgang verschiedenes Polymer, Oligomer oder Mischung aus diesen eingesetzt wird. Die Polymeren oder Oligomeren werden verflüssigt, in dem sie entweder in einem geeigneten Lösungsmittel gelöst oder ohne Lösungsmittel aufgeschmolzen werden.

In einer weiteren Ausführungsvariante des erfindungsgemäßen Verfahrens zur Herstellung eines beschichteten Düngemittelgranulats wird - nach einer ersten Benetzung und anschließenden Verfestigung, - eine Schicht aus Düngemittelwirkstoff auf die beschichtete Oberfläche aufgebracht, - diese Schicht aus Düngemittelwirkstoff anschließend verfestigt wird, indem diese getrocknet, gekühlt oder beides wird, - abschließend in analoger Weise eine weitere Schicht des Polymers oder Oligomers aufgebracht wird, wobei diese Schritte abwechselnd mehrmals erfolgen können.

Bei dem Einsatz von Polymer oder Oligomer mit sehr niedrigen Molmassen kann eine gewisse Klebrigkeit vorliegen, die Komplikationen bei der nachfolgenden Verarbeitung erzeugt. Es hat sich herausgestellt, dass diese Nachteile sehr einfach überwunden werden können, wenn die äußerste Schicht aus dem Basisnährstoff des Düngemittels oder einen anderen nichtpolymeren Nährstoff hergestellt wird. Der Basisnährstoff ist dabei allerdings zu bevorzugen, da dieser ohnehin im Verfahren als Schmelze oder Lösung vorliegt und nur in einer weiteren Beschichtungsstufe abschließend aufgetragen werden muss.

Eine verbesserte Variante des Verfahrens sieht vor, dass das Polymer oder Oligomer vor der Benetzung des unbeschichteten oder teilbeschichteten Düngemittelgranulats mit Spurennährstoffen gemischt wird, wobei die Spurennährstoffe zum Beispiel aus der Gruppe der Alkali- oder Erdalkalimetalle, Schwefel, Kupfer, Zink, Bor, Kobalt, Selen, Mangan, Molybdän sowie diese Stoffe beinhaltende chemische Verbindungen oder Mischungen entstammen. Im Falle einer Endbeschichtung mit dem Basisnährstoff, kann die Zugabe der Spurennährstoffe auch in die für diese Endbeschichtung vorgesehene Schmelze oder Lösung erfolgen.

Zur Beschichtung des Düngemittelgranulats kann eine beliebige Beschichtungsvorrichtung vorgesehen werden, wobei in einer vorteilhaften Ausgestaltung des erfindungsgemäßen Verfahrens ein Fließbettgranulator oder eine Beschichtungstrommel eingesetzt wird. Dabei wird das verflüssigte Polymer, Oligomer oder die Mischung derselben mittels Düsen, welche im Idealfall beheizbar sind, auf das zu beschichtende Granulat aufgegeben.

Idealerweise wird das verflüssigte Polymer, Oligomer oder die Mischung als weitgehend lösungsmittelfreie Schmelze aufgegeben, da dies die Abluftreinigung vereinfacht, was wirtschaftlich vorteilhaft ist.

## Patentansprüche

1. Beschichtetes Düngemittelgranulat, welches
• eine Beschichtung aus einem oder mehreren biologisch oder hydrolytisch abbaubaren Polymeren, Oligomeren oder einer Mischung besitzt, die ein Polylactid oder einen Copolyester der L(+) Milchsäure umfasst, wobei
• über 40 mol % der molekularen Grundbausteine des Polylactids aus L(+)-Milchsäureeinheiten bestehen,
• das Polymer oder Oligomer von Dilactid, Lactoylmilchsäure oder eine Mischung daraus einen Gehalt aufweist, welcher kleiner oder gleich 5 Gewichtsprozent beträgt,
• das Düngemittel zwei oder mehr Schichten von Polymeren oder Oligomeren aufweist, welche aus dem selben oder unterschiedlichen Stoffen bestehen, wobei zwischen zwei Schichten aus Polymeren oder Oligomeren sich eine weitere Schicht aus Düngemittelwirkstoff befindet.

2. Düngemittelgranulat nach Anspruch 1,
**dadurch gekennzeichnet, dass** der Rest der Grundbausteine, welche keine L(+)-Milchsäureeinheiten sind, aus D(-)-Milchsäureeinheiten und/oder aus den Einheiten mindestens einer Hydroxycarbonsäure oder einer Mischung daraus besteht.

3. Düngemittelgranulat nach einem der Ansprüche 1 oder 2, **dadurch gekennzeichnet,**
**dass** das Zahlenmittel der Molmasse des Polymers oder des Oligomers zwischen 500 und 5.000 g/mol beträgt.

4. Düngemittelgranulat nach einem der Ansprüche 1 bis 3,
**dadurch gekennzeichnet, dass** der prozentual größte Nährstoffanteil des Düngemittels eine Stickstoff-, Phosphor- oder Kaliumverbindung oder eine Mischung aus diesen ist, und insbesondere Harnstoff, Ammoniumnitrat, Calciumnitrat, Calciumammoniumnitrat, Mono- oder Diammoniumphosphat, Kaliumphosphat, Kaliumstickstoffphosphat, Sulfate, wie Ammoniumsulfat oder eine Mischung aus diesen umfasst.

5. Düngemittelgranulat nach einem der Ansprüche 1 bis 4,
**dadurch gekennzeichnet, dass** dieses in geringen Anteilen Spurennährstoffe
- der Alkali- oder Erdalkalimetalle,
- Bor, Kobalt, Kupfer, Mangan, Molybdän, Schwefel, Selen, Zink
- Calciumcarbonat, Kalium- oder Natriumhydrogencarbonat
sowie diese Stoffe beinhaltende chemische Verbindungen oder Mischungen enthält.

6. Düngemittel nach einem der Ansprüche 1 bis 5,
**dadurch gekennzeichnet, dass** die äußerste Schicht aus einem oder mehreren der in Anspruch 5 definierten Nährstoffe gebildet ist und Vorzugsweise aus dem Nährstoff gebildet ist, welcher gewichtsmäßig die Hauptkomponente des Düngemittels darstellt.

7. Düngemittel nach einem der Ansprüche 1 bis 6,
**dadurch gekennzeichnet, dass** mindestens eine der Schichten aus biologisch abbaubaren Polymeren, Oligomeren oder Mischungen Spurennährstoffe enthält.

8. Düngemittel nach einem der Ansprüche 1 bis 7,
**dadurch gekennzeichnet, dass** Spurennährstoffe ausschließlich in einer der Schichten aus biologisch abbaubaren Polymeren oder Oligomeren enthalten sind.

9. Verfahren zur Herstellung eines beschichteten Düngemittelgranulats nach einem der vorstehenden Ansprüche,
**dadurch gekennzeichnet, dass**
- unbeschichtetes festes Düngemittelgranulat mit den Inhaltsstoffen gemäß den Ansprüchen 3 oder 4, mit einer Beschichtung gemäß einer der Ansprüche 1 bis 2 mindestens einmal benetzt und
- anschließend das Polymer oder Oligomer durch Trocknung und/oder Kühlung verfestigt wird, wobei
- die Benetzung und die nachfolgende Trocknung und/oder Kühlung mehrmals wiederholt werden können und dazu
- dasselbe oder ein zum vorausgegangen Benetzungsvorgang verschiedenes verflüssigtes Polymer, Oligomer oder Mischung aus diesen eingesetzt wird.

10. Verfahren zur Herstellung eines beschichteten Düngemittelgranulats nach Anspruch 9,
**dadurch gekennzeichnet, dass** in einem ersten Schritt ein Polylactid oder ein Copolyester der L(+) Milchsäure mittels Direktkondensation hergestellt und nachfolgend das Verfahren gemäß Anspruch 17 durchgeführt wird.

11. Verfahren zur Herstellung eines beschichteten Düngemittelgranulats nach einem der Ansprüche 9 oder 10,
**dadurch gekennzeichnet, dass** das Verfahren gemäß Anspruch 9 dahingehend erweitert wird, dass
- nach einer ersten Benetzung und anschließenden Verfestigung,
- eine Schicht aus Düngemittelwirkstoff auf die beschichtete Oberfläche aufgebracht wird,
- diese Schicht aus Düngemittelwirkstoff in einem zweiten Schritt ebenfalls verfestigt wird und
- abschließend in analoger Weise eine weitere Schicht des Polymers, Oligomers oder einer Mischung aus diesen aufgebracht wird, wobei diese Schritte abwechselnd mehrmals erfolgen können.

12. Verfahren nach einem der Ansprüche 9 bis 11,
**dadurch gekennzeichnet, dass** das Polymer, Oligomer oder die Mischung aus diesen vor oder nach der Verflüssigung und vor der Benetzung des unbeschichteten oder teilbeschichteten Düngemittelgranulats mit Spurennährstoffen gemischt wird.

13. Verfahren nach Anspruch 12,
**dadurch gekennzeichnet, dass** die Spurennährstoffe aus der Gruppe der Alkali- oder Erdalkalimetalle, Schwefel, Kupfer, Zink, Bor, Kobalt, Mangan, Molybdän oder Selen sowie diese Stoffe beinhaltende chemische Verbindungen oder Mischungen entstammen.

14. Verfahren zur Herstellung eines beschichteten Düngemittelgranulats nach einem der Ansprüche 9 bis 13,
**dadurch gekennzeichnet, dass** für die Beschichtung eine beliebige Beschichtungsvorrichtung und idealerweise ein Fließbettgranulator oder eine Beschichtungstrommel eingesetzt wird.

15. Verfahren zur Herstellung eines beschichteten Düngemittelgranulats nach einem der Ansprüche 9 bis 14,
**dadurch gekennzeichnet, dass** das verflüssigte Polymer- oder Oligomer mit Sprühdüsen auf das zu beschichtenden Granulat aufgebracht wird.

16. Verfahren zur Herstellung eines beschichteten Düngemittelgranulats nach Anspruch 15,
**dadurch gekennzeichnet, dass** die Sprühdüsen beheizbar sind.

17. Verfahren zur Herstellung eines beschichteten Düngemittelgranulats nach einem der Ansprüche 9 bis 16, **dadurch gekennzeichnet, dass** eine äußerste Schicht aufgetragen wird, die aus einem oder mehreren Nährstoffen besteht, die aus der in Anspruch 4 oder 5 definierten Gruppe genommen sind.

## Claims

1. Coated fertiliser granules,
• the coating of which consists of one or more biologically or hydrolytically degradable polymers, oligomers or a mixture thereof, which contain a polylactide or a co-polyester of the L(+)-lactic acid, wherein
• more than 40 mol% of the basic molecular building blocks of the polylactide consist of L(+)-lactic acid units,
• the polymer or oligomer has a certain content of dilactide, lactoyl lactic acid or a mixture thereof, which is less than or equal to 5% by weight,
• the fertiliser has two or more layers of polymers or oligomers which consist of the same or different substances, with a further layer of active fertiliser ingredient being provided between the two layers of polymers or oligomers.

2. Fertiliser granules according to claim 1,
**characterised in that** the remainder of the basic building blocks which are not L(+)-lactic acid units consists of D(-)-lactic acid units and/or units of at least one hydroxycarboxylic acid or a mixture thereof.

3. Fertiliser granules according to one of claims 1 or 2,
**characterised in that** the number average molar mass of the polymer or the oligomer is between 500 and 5,000 g/mol.

4. Fertiliser granules according to one of claims 1 to 3,
**characterised in that** the largest proportion of the fertiliser nutrient in percentage terms is a compound of nitrogen, phosphorus or potassium or a mixture thereof, and in particular urea, ammonium nitrate, calcium nitrate, calcium ammonium nitrate, monoammonium phosphate or diammonium phosphate, potassium phosphate, potassium nitrogen phosphate, sulphates such as ammonium sulphate or a mixture thereof.

5. Fertiliser granules according to one of claims 1 to 4,
**characterised in that** they contain small amounts of micronutrients
- of alkali or alkaline-earth metals,
- boron, cobalt, copper, manganese, molybdenum, sulphur, selenium, zinc,
- calcium carbonate, potassium hydrogen carbonate or sodium hydrogen carbonate, and chemical compounds or mixtures containing these substances.

6. Fertiliser according to one of claims 1 to 5,
**characterised in that** the outermost layer consists of one or more of the nutrients defined in claim 5 and preferably consists of the nutrient which represents the main component of the fertiliser by weight.

7. Fertiliser according to one of claims 1 to 6,
**characterised in that** at least one of the layers consisting of biodegradable polymers, oligomers or a mixture thereof contains micronutrients.

8. Fertiliser according to one of claims 1 to 7,
**characterised in that** micronutrients are exclusively contained in one of the layers of biodegradable polymers or oligomers.

9. Process for the production of coated fertiliser granules according to one of the previous claims,
**characterised in that**
- solid uncoated fertiliser granules consisting of ingredients according to claims 3 or 4 are wetted at least once with a layer according to one of claims 1 to 2, and
- subsequently the polymer or oligomer is hardened by means of drying and/or cooling, whereby
- the wetting and subsequent drying and/or cooling may be repeated several times and, in addition,
- the same or a different liquefied polymer, oligomer or mixture thereof which is different from the one used in the previous wetting process is used.

10. Process for the production of coated fertiliser granules according to claim 9, **characterised in that** in an initial step a polylactide or a co-polyester of L(+)-lactic acid is produced by direct condensation and that subsequently the process according to claim 17 is carried out.

11. Process for the production of coated fertiliser granules according to one of claims 9 or 10,
**characterised in that** the process according to claim 9 is extended so that,
- following a first wetting and subsequent hardening step,
- a layer of active fertiliser ingredient is applied to the coated surface,
- this layer of active fertiliser ingredient is also hardened in a second step, and
- finally in a similar manner a further layer of the polymer, oligomer or a mixture thereof is applied, wherein these steps may be carried out several times alternately.

12. Process according to one of claims 9 to 11,
**characterised in that** the polymer, oligomer or a mixture thereof is mixed with micronutrients prior to or after liquefaction and prior to the wetting of the uncoated or partly coated fertiliser granules.

13. Process according to claim 12,
**characterised in that** the micronutrients are taken from the group of alkali or alkaline-earth metals, sulphur, copper, zinc, boron, cobalt, manganese, molybdenum or selenium and chemical compounds or mixtures containing these substances.

14. Process for the production of coated fertiliser granules according to one of claims 9 to 13,
**characterised in that** any type of coating equipment may be used for coating, ideally a fluid-bed granulator or a coating drum.

15. Process for the production of coated fertiliser granules according to one of claims 9 to 14,
**characterised in that** the liquefied polymer or oligomer is applied to the granules to be coated by means of spray nozzles.

16. Process for the production of coated fertiliser granules according to claim 15,
**characterised in that** the spray nozzles can be heated.

17. Process for the production of coated fertiliser granules according to one of claims 9 to 16,
**characterised in that** an outermost layer is applied which consists of one or more nutrients taken from the group defined in claims 4 or 5.

## Revendications

1. Granulé d'engrais enrobés,
• Présentant un enrobage composé d'un ou de plusieurs polymère(s), oligomère(s) biologiquement ou hydrolytiquement dégradable(s), ou d'un mélange comprenant un acide polylactique ou un copolyester de l'acide lactique L(+), sachant que
• Plus de 40 mole %des composants moléculaires de base de l'acide polylactique sont composés d'unités d'acide lactique L(+), et que
• Le polymère ou l'oligomère de dilactide, d'acide lactique ou un mélange de ceux-ci présente une teneur inférieure ou égale à 5 pourcents en poids, et que
• L'engrais présente au moins deux couches de polymères ou d'oligomères composées de substances identiques ou différentes, sachant qu'entre deux couches de polymères ou d'oligomères se trouve une autre couche de substance active d'engrais.

2. Granulé d'engrais selon la revendication 1,
**caractérisé en ce que** le reste des composants de base autres que les unités d'acide lactique L(+) sont composés d'unités d'acide lactique D(-) et/ou d'unités d'au moins un hydroxyacide ou d'un mélange de ceux-ci.

3. Granulé d'engrais selon une des revendications 1 ou 2, **caractérisé en ce que** le nombre moyen de la masse molaire du polymère ou de l'oligomère est comprise entre 500 et 5.000 g/mole.

4. Granulé d'engrais selon une des revendications 1 à 3,
**caractérisé en ce que** la plus forte teneur nutritive de l'engrais en pourcentage est un composé de l'azote, du phosphore ou du potassium ou un mélange de ceux-ci et qu'elle comprend en particulier de l'urée, de l'ammonitrate, du nitrate de calcium, de l'ammonitrate de calcium, du monophosphate ou du diammonium phosphate, du phosphate de potassium, du phosphate d'azote de potassium, des sulfates comme le sulfate d'ammonium ou un mélange de ceux-ci.

5. Granulé d'engrais selon une des revendications 1 à 4,
**caractérisé en ce qu'**il comprend de faibles teneurs des éléments traces
• De métaux alcalins ou alcalino-terreux,
• De bore, cobalt, cuivre, manganèse, molybdène, soufre, sélénium, zinc,
• De carbonate de calcium, bicarbonate de potassium ou de sodium ainsi que des composés chimiques ou mélanges comprenant ces substances.

6. Granulé d'engrais selon une des revendications 1 à 5,
**caractérisé en ce que** la couche extérieure est composée d'un ou plusieurs éléments nutritifs définis à la revendication 5, de préférence de l'élément nutritif constituant par son poids les composants principaux de l'engrais.

7. Granulé d'engrais selon une des revendications 1 à 6,
**caractérisé en ce qu'**au moins une des couches contient des polymères, oligomères biodégradables ou des mélanges de nutriments traces.

8. Granulé d'engrais selon une des revendications 1 à 7,
**caractérisé en ce que** les nutriments traces sont compris exclusivement dans une des couches de polymères ou oligomères biodégradables.

9. Procédé de fabrication d'un granulé d'engrais enrobé selon une des revendications susnommées,
**caractérisé en ce que**
- le granulé d'engrais solide et non enrobé avec les composants conformément aux revendications 3 ou 4, est mouillé au moins une fois avec un enrobage conformément à une des revendications 1 à 2 et que
- ensuite, le polymère ou l'oligomère est consolidé par séchage et/ou refroidissement, sachant que
- le mouillage et le séchage et/ou refroidissement suivant peuvent être répétés plusieurs fois et que
- il est utilisé le même polymère, oligomère fluidifié ou un mélange des deux ou bien un différent de celui utilisé lors du processus de mouillage précédent.

10. Procédé de fabrication d'un granulé d'engrais enrobé selon la revendication 9, **caractérisé en ce que** lors d'une première étape, est fabriqué un acide polylactique ou un copolyester de l'acide lactique L(+) par condensation directe et que le procédé est réalisé par la suite selon la revendication 17.

11. Procédé de fabrication d'un granulé d'engrais enrobé selon une des revendications 9 ou 10,
**caractérisé en ce que** le procédé conformément à la revendication 9 est développé **en ce que**
- après un premier mouillage et la solidification suivante,
- une couche de substance active d'engrais est appliquée sur la surface enrobée,
- cette couche de substance active d'engrais est à son tour solidifiée lors d'une deuxième étape et que
- pour finir, une autre couche de polymère, oligomère ou mélange des deux est appliquée de manière analogue, sachant que ces étapes peuvent être répétées plusieurs fois tour à tour.

12. Procédé selon une des revendications 9 à 11,
**caractérisé en ce que** le polymère, l'oligomère ou le mélange des deux est mélangé à des nutriments traces avant ou après la fluidification et avant le mouillage du granulé d'engrais non enrobé ou partiellement enrobé.

13. Procédé selon la revendication 12,
**caractérisé en ce que** les nutriments traces proviennent du groupe des métaux alcalins ou alcalino-terreux, du soufre, cuivre, zinc, bore, cobalt, manganèse, molybdène ou sélénium ainsi que des composés chimiques ou mélanges comprenant ces substances.

14. Procédé de fabrication d'un granulé d'engrais enrobé selon une des revendications 9 à 13,
**caractérisé en ce que** pour l'enrobage, il est utilisé un dispositif d'enrobage quelconque et dans l'idéal, un granulateur à lit fluidisé ou un tambour d'enrobage.

15. Procédé de fabrication d'un granulé d'engrais enrobé selon une des revendications 9 à 14,
**caractérisé en ce que** le polymère ou l'oligomère fluidifié est appliqué sur le granulé à enrober à l'aide de bombes à aérosol.

16. Procédé de fabrication d'un granulé d'engrais enrobé selon la revendication 15, **caractérisé en ce que** les bombes à aérosol peuvent être chauffées.

17. Procédé de fabrication d'un granulé d'engrais enrobé selon une des revendications 9 à 16, **caractérisé en ce qu'**une dernière couche extérieure est appliquée, composée d'un ou de plusieurs nutriments provenant du groupe défini à la revendication 4 ou 5.
